# EUROPEAN PATENT SPECIFICATION

(11) **EP 0 737 596 B1**
(45) Date of publication and mention of the grant of the patent: **06.12.2000**
(21) Application number: 96200969.2
(22) Date of filing: 09.04.1996
(51) Int. Cl.: B60B 33/02

(54) **A system, including an operating bar, for locking castor units mounted on movable bodies, for example, refuse bins**
Ein System mit Steuerstab für das Blockieren von Laufrädern von beweglichen Körpern, insbesondere von Müllbehältern
Un système comprenant une barre de commande pour bloquer des roulettes montées sur des unités roulantes, par exemples des poubelles

(30) Priority: 11.04.1995 IT BO950159
(43) Date of publication of application: 16.10.1996
(73) Proprietor: TELLURE ROTA S.p.A., 41043 Formigine (Modena) (IT)
(72) Inventor: Botti, Giorgio, 41042 Casalgrande (RE) (IT)
(74) Representative: Cantaluppi, Stefano

(56) References cited:
- EP-A- 0 141 270
- EP-A- 0 631 888
- CH-A- 570 802
- CH-A- 585 121
- DE-A- 3 602 916
- : "Industrial Fasteners Handbook", 1976, TRADE & TECHNICAL PRESS LTD., SURREY, ENGLAND
- ROBERT O. PAMLEY: "Standard Handbook of Fastening and Joining", 1989, MCGRAW HILL PUBLISHING COMPANY, NEW YORK

## Description

The present invention relates to a system, of the type including an operating bar, for locking castor units mounted on movable bodies.

A non-limiting example of a field of use of a locking system of this type is that of bins, for example, refuse bins, of the type comprising a tank-like body beneath which four castor units, of which two are lockable, are mounted. The most widespread type of lockable castor unit comprises a wheel rotatable about a horizontal axis, supported by a yoke which in turn is mounted for rotating about a vertical axis on a support plate, to enable the bin to be manoeuvred and steered. Various solutions are known for locking the rotation both of the wheel and of the yoke, one of which is described, for example, in the Applicant's European patent application EP-0 631 888, according to the preamble of claim 1. This solution provides for a pin which is mounted for sliding vertically and is selectively movable from a release position to a locking position by means of an actuator mechanism projecting from the top of the support plate on the opposite side to the yoke. The actuator mechanism includes a cam rotated by a bar bearing an operating pedal at one end. The cross-section of the bar is usually polygonal, preferably hexagonal.

Bins of the type mentioned above usually have four feet each of which is formed, for example, by four sides which define a hole at the bottom. A castor unit is mounted on each of the feet in a manner such that the support plate closes the lower hole so that the actuator mechanism is enclosed inside the foot between the four sides and the base of the tank-like body. The operating bar generally activates the locking of the two lockable castor units simultaneously and, for this purpose, is coupled to the respective actuator mechanisms through slot-like holes formed in the sides of the feet of the bin.

To prevent the bar from coming out of the actuator mechanisms of the castor units in the condition of use by being pulled from the end on which the pedal is mounted, one of many solutions commonly adopted consists of the fixing of a restraining element between the pedal and the actuator mechanism of the first castor unit, the restraining element having two shoulders which abut the internal and external surfaces, respectively, of one of the sides of the foot of the bin.

A known locking system of this type is fitted by the insertion of the bar in the actuator mechanisms of two castor units, the positioning of the castor units at a predetermined distance from the restraining element, and the subsequent screwing of the support plates of the castor units to the feet of the bin.

A disadvantage of the known locking systems described above is that the fitting operations have to be carried out by hand since it is difficult or extremely expensive to automate the precise positioning of the castor units on the bar so that they conform to the distance between the feet of each individual bin.

Moreover, this fitting is made even more difficult by the fact that the abutment element in turn also has to be in a very precise position relative to the side of one of the feet. In fact, even if only one of the castor units slides slightly on the bar during the fitting, there is a risk that the abutment element will not engage correctly on the side of the foot, necessitating repositioning of the castor units on the bar. This positioning difficulty is made even worse by the fact that, for reasons of production economy, the distance between the feet of the bin may vary within very wide tolerance limits, particularly in the case of bins produced by the moulding of plastics material.

A further disadvantage is that the assembly constituted by the bar with the two castor units positioned thereon is difficult, or in any case awkward, to handle. This also increases the risk of bending or twisting the bar.

The object of the present invention is to overcome the disadvantages of the prior art, in particular, by providing a system for locking castor units which can be fitted easily, facilitating the use of automatic assembly systems, and which is also cheap to produce and safe and reliable in use.

To achieve this object, the subject of the invention is a system for locking a castor unit of the type indicated in the introduction to the present description, having the characteristics indicated in Claim 1 below.

An advantage of the present invention is that the operating bar can be made entirely of metal, thus facilitating finishing operations such as, for example, galvanizing which is also commonly carried out on known systems.

Further characteristics and advantages will become clear from the following description of a preferred embodiment, given purely by way of non-limiting example, with reference to the appended drawings, in which:
Figure 1 is a schematic perspective view of a bin on which the locking system of the present invention is fitted,
Figure 2 is a vertical section of a known castor unit, particularly suitable for the implementation of the present invention,
Figure 3 shows a hexagonal bar used in the system of the present invention,
Figure 4 shows a detail of the bar of Figure 3 with the system according to the present invention in the assembled condition,
Figures 5 and 6 are alternative embodiments of the end of the hexagonal bar of Figure 3, shown on an enlarged scale,
Figure 7 is a section taken on the line VII-VII of Figure 2 of the actuator mechanism and of the end of the bar of Figure 3, in the assembled condition,
Figure 8 is a view taken on the arrow VIII of Figure 7.

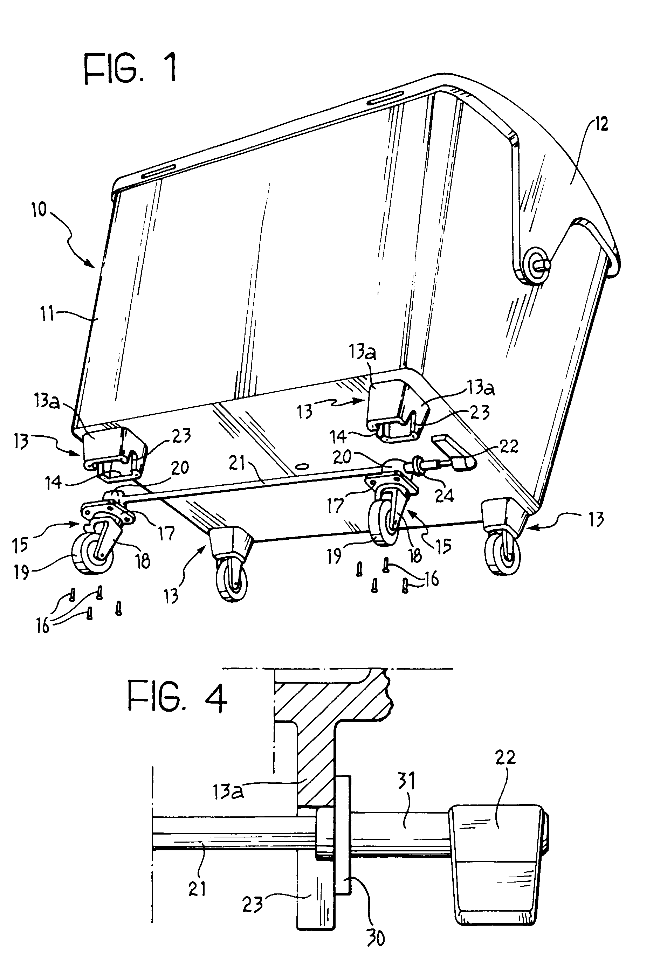

With reference now to Figure 1, a bin 10, for example, a refuse bin, comprises a tank-like body 11 closed at the top by a lid 12 and having four feet 13 at the bottom. The tank-like body 11 and the feet are preferably, but not necessarily, made of plastics material and produced by moulding. Each foot 13 has four side faces 13a defining a hole 14 at the bottom which is intended to be closed by a support plate 17 of a castor unit 15 mounted on the foot by means, for example, of screws 16.

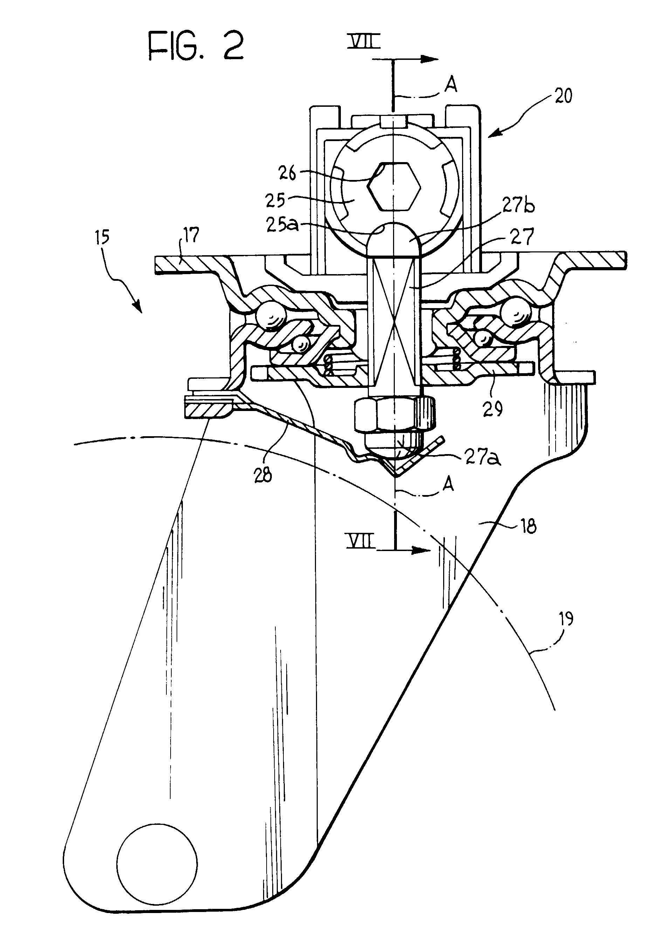

The support plate 17 of the castor unit 15 supports for rotation a yoke 18 which in turn supports a wheel 19, the profile of which is shown partially in chain line in Figure 2. A pin 27 is mounted for sliding along an axis A-A coinciding with the axis of rotation of the yoke 18; a plate spring 28 pushes against the lower end 27a of the pin 27 so as to keep its upper end 27b in contact with the active surface 25a of a cam 25 of an actuator mechanism 20. A hexagonal hole 26 in the cam 25 is intended to house an operating bar 21 (see Figure 1). A rotation of the cam 25 causes the pin 27 to be lowered and the wheel 19 consequently to be locked by the plate spring 28. The lowering of the pin 27 simultaneously enables a toothed disc 29 to be lowered, engaging catch projections (not shown) on the sides of the yoke 18 so that its rotation is locked.

The details of the construction and operation of the castor unit 15 will not be discussed in greater detail since they fall outside the scope of the present invention which, however, may also be applied to castor units produced and operating according to principles other than that described by way of example.

With reference to Figure 1, the actuator mechanism 20 of a castor unit 15 is intended to be housed inside a foot 13 and can be operated, in conditions of use, by means of the bar 21 which connects the actuator mechanisms of two adjacent castor units through slots 23 in the sides of the feet, and has a pedal 22 at one end. An abutment element 24 is fixed to the bar 21 between the pedal 22 and the actuator mechanism 20 of the first castor unit.

The bar 21 is also associated with a clamping locking system (not shown in the drawings for reasons of clarity) which enables the castor units to be held in the locked position. These clamping locking systems are widely known in the art and, since they do not fall within the scope of the present invention, will not be discussed in the following description.

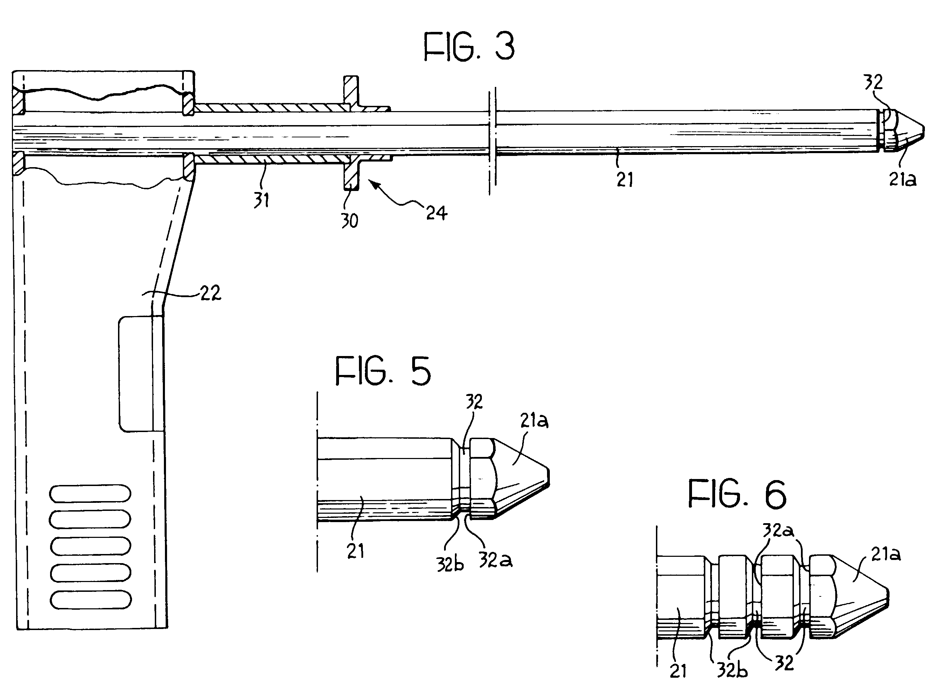

As can best be seen in Figure 3, the abutment element 24 comprises a disc 30, the distance of which from the pedal 22 is predetermined by means, for example, of a tubular spacer 31. The abutment element can be fixed to the bar, for example, by means of a spot weld or by any other generally known method. As can be seen in Figure 4, the disc-shaped element 30 has a diameter larger than the width of the slot 23, for reasons which will become clear from the following.

The opposite end 21a of the bar 21 to the end on which the pedal 22 is mounted is conical or, more generally, tapered. An annular groove 32 formed near the conical end 21a preferably has a diameter smaller than the circle inscribed in the hexagonal cross-section of the bar 21. A rear side 32b of the groove 32, on the left-hand side in Figure 5, is preferably chamfered, whereas the front side 32a forms a right angle with the base of the groove.

A variant of the bar 21 provides for the formation of a row of grooves 32 spaced apart longitudinally and preferably uniformly, as can be seen in Figure 6.

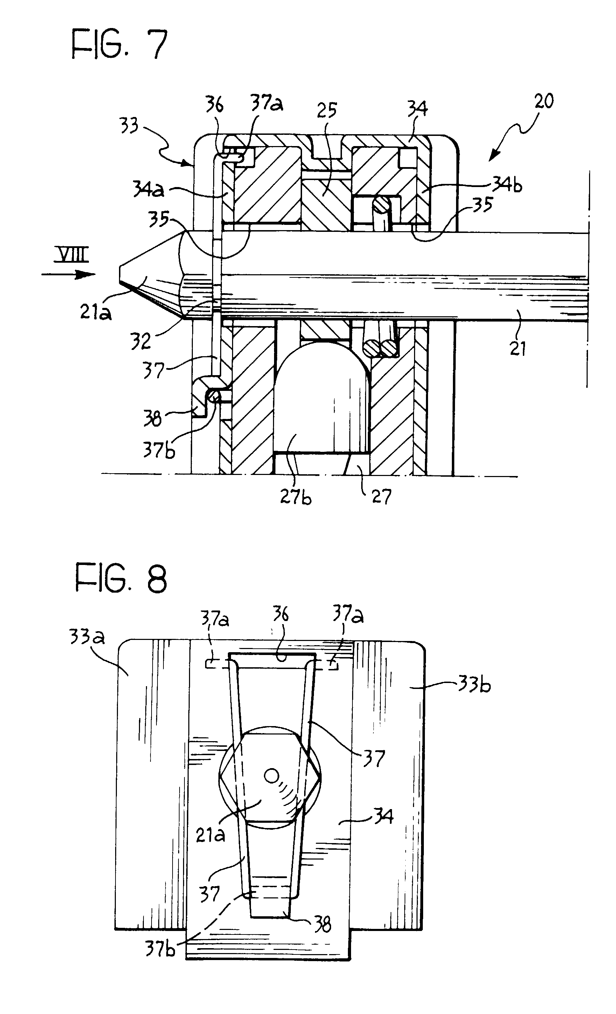

The cam 25 (see Figures 7 and 8) is enclosed in a casing 33 preferably constituted by two half-shells 33a, 33b of plastics material held together by a substantially U-shaped bent plate 34, preferably of metal. A hole 35 for the passage of the bar 21 extends through the casing 33 and the sides 34a, 34b of the plate 34. The side 34a which is on the left-hand side in Figure 7 has a transverse slot 36 engaged by the small end portions 37a of a substantially U-shaped wire spring 37 of which the side arms, which are inclined slightly to the vertical, are joined together by a straight portion 37b in turn engaged under a hook 38 formed, for example, by the partial blanking and bending of a portion of the plate 34. A corresponding slot and hook may also be provided and formed on the side 34b of the plate 34.

In the absence of the bar 21, the wire spring 37 can easily be removed from the position shown in Figures 7 and 8 simply by movement of its side arms towards one another so as to remove the small end portions 37a from the slot 36, and the subsequent removal of the portion 37b from the hook 38. A reverse operation enables the wire spring 37 to be repositioned correctly.

In order to fit the locking system described above, first and second castor units 15 are provided, the actuator mechanism 20 of the second castor unit having the wire spring 37. First of all, the two castor units are screwed to the respective feet 13 of the bin, account being taken of the fact that the second castor unit which has the wire spring has to be fitted on the foot 13 farthest from the envisaged position of the pedal 22 of the operating bar 21. The bar 21 is then inserted through the slots 23 into the hole 35 in the actuator mechanism of the first castor unit and then into that of the second castor unit, until the arms of the wire spring are disposed adjacent the groove 32 and, by engaging therein, lock the translational movement of the bar 21. The alternative version of the bar 21 shown in Figure 6, comprising a row of grooves 32, enables the longitudinal position of the bar 21 to be adjusted to take account of the tolerances in the distance between the feet 13. In fact, by virtue of the chamfering of the side 32b of each groove, the arms of the wire spring 37 can pass from one groove to the next, permitting unidirectional translation of the bar 21 in the direction in which it is inserted. When the abutment element 24 comes into abutment with the side of the foot 13, it suffices to retract the bar 21 slightly until the wire spring engages in the first groove available. At this point, any further removal of the bar 21 is prevented by the detent constituted by the side 32a of the groove 32.

Naturally, if a single groove 32 is provided at the end of the bar 21 it is not necessary for the rear side 32b to be chamfered.

In order even further to facilitate the automation of the assembly of the locking system described above, all of the actuator mechanisms both of the first and of the second castor unit, may have wire springs, possibly mounted on both sides of the plates 34. Naturally, only one wire spring will be used actively for locking the bar 21 by engaging in the groove 32. However, the automatic fitting of the castor units on the feet 13 is thus facilitated since it is no longer necessary to distinguish the first castor unit from the second or to recognize the orientation of the second castor unit relative to the direction of insertion of the bar 21.

Moreover, many other variants of the application of the present invention will be clear to an expert in the art. For example, the groove 32 may be formed close to the abutment element 24 so that the active wire spring can be fitted on the first castor unit instead of on the second.

The fact that the wire spring can be removed or positioned easily on the actuator mechanism of a castor unit according to choice is particularly advantageous. In the absence of the wire spring, the castor unit does not differ in its characteristics of use from conventional castor units and, moreover, can quickly be used to form a locking system according to the present invention, if necessary, simply by the addition of the wire spring.

Naturally, the principle of the invention remaining the same, the forms of embodiment and details of construction may be varied widely with respect to those described and illustrated. For example, the wire spring may be replaced by any other resilient element which reacts by bending upon insertion of the bar 21 but which blocks its removal by snap-engaging in the groove 32. To give only one example, this function may be performed by a flat spring, or a resilient tongue-like element arranged parallel to the side 34a of the plate 34 with its end connected thereto. The other end of the flat spring partially covers the hole 35 so as to be bent resiliently by the bar 21 until it snaps into the groove 32.

## Claims

1. A system for locking castor units suitable for mounting on movable bodies (10) such as refuse bins comprising:
- at least one lockable castor unit (15),
- at least one actuator mechanism (20) for the at least one castor unit (15) comprising a casing (33, 34) with a transverse hole (35),
- an operating bar (21) received in said hole (35) and coupled to said actuator mechanism (20) for the operative actuation of said mechanism (20) and
- retaining means for axially retaining the bar (21) coupled to the respective actuator mechanisms (20), characterised in that said retaining means comprise at least one annular groove (32) formed on said bar (21) and a resilient engagement means (37) mounted on the casing (33, 34), resiliently deformable upon insertion of the bar (21) in the transverse hole (35) to snap engage in said at least one groove (32) for axially clamping the bar (21) relatively to the casing (33, 34) of the actuator mechanism (20).

2. A system according to Claim 1, characterised in that the bar (21) has a conical end (21a) for insertion in the transverse hole (35), the at least one annular groove (32) being formed close to the conical end (21a).

3. A system according to Claim 1 or Claim 2, characterised in that the bar has a plurality of annular grooves (32) spaced apart to a predetermined extent.

4. A system according to Claim 1, characterized in that the resilient engagement means (37) can be removed from the casing (33, 34) when the bar (21) is not inserted in the transverse hole (35).

5. A system according to Claim 4, characterized in that the transverse hole (35) defines two opposed holes in the casing (33, 34), the resilient engagement means (37) being capable of being mounted selectively on the actuator mechanism adjacent one and/or the other of the opposed holes.

6. A system according to Claim 1, characterized in that the resilient engagement means includes a wire spring (37) comprising two straight portions which are bent sideways by the bar (21) when said bar is inserted in the transverse hole (35), returning towards the straight configuration again when said portions engage in the at least one annular groove (32).

7. A system according to Claim 6, characterized in that the wire spring (37) is substantially U-shaped, the straight portions being joined together at one end by a straight portion (37b) which, when the wire spring is in the mounted configuration, is hooked onto a hook (38) formed on the casing (33, 34), each of the other ends of the straight portions terminating in a small end portion (37a) which is engaged on the casing (33, 34), extending into it through a slot (36).

8. A system according to Claim 1, characterized in that the resilient engagement means (37) comprises a flat spring.

## Patentansprüche

1. System für das Blockieren von Laufrädern, das zur Montage an beweglichen Körpern, insbesondere von Müllbehältern geeignet ist, mit:
- wenigstens einem blockierbaren Laufrad (15),
- wenigstens einem Betätigungsmechanismus (20) für das wenigstens eine Laufrad (15), der ein Gehäuse (33, 34) mit einem Querloch (35) umfasst,
- einen in dem Loch (35) aufgenommenen, an den Betätigungsmechanismus (20) für die Wirkbetätigung des Mechanismus (20) gekoppelten Betätigungsstab (21) und
- Haltemittel zum axialen Halten des an die jeweiligen Betätigungsmechanismen (20) gekoppelten Stabes (21), dadurch gekennzeichnet, dass die Haltemittel wenigstens eine an dem Stab (21) gebildete Ringnut (32) und am Gehäuse (33, 34) montierte federnde Eingriffmittel (37) umfassen, die bei Einführung des Stabes (21) in das Querloch (35) federnd verformbar sind, um in die wenigstens eine Nut (32) zum axialen Einklemmen des Stabes (21) relativ zum Gehäuse (33, 34) des Betätigungsmechanismus (20) einzurasten.

2. System nach Anspruch 1, dadurch gekennzeichnet, dass der Stab (21) ein kegelförmiges Ende (21a) zum Einführen in das Querloch (35) hat, und dass die wenigstens eine Ringnut (32) nahe an dem kegelförmigen Ende (21a) gebildet ist.

3. System nach Anspruch 1 oder Anspruch 2, dadurch gekennzeichnet, dass der Stab eine Mehrzahl von Ringnuten (32) in einem vorgegebenen Abstand hat.

4. System nach Anspruch 1, dadurch gekennzeichnet, dass das federnde Eingriffmittel (37) von dem Gehäuse (33, 34) entfernbar ist, wenn der Stab (21) nicht in das Querloch (35) eingeführt ist.

5. System nach Anspruch 4, dadurch gekennzeichnet, dass das Querloch (35) zwei gegenüberliegende Löcher im Gehäuse (33, 34) definiert, und das das federnde Eingriffmittel (37) wahlweise an dem zum Betätigungsmechanismus benachbarten und/oder dem anderen der gegenüberliegenden Löcher montierbar ist.

6. System nach Anspruch 1, dadurch gekennzeichnet, dass das federnde Eingriffmittel eine Drahtfeder (37) umfasst, die zwei gerade Abschnitte aufweist, die durch den Stab (21) seitwärts gebogen werden, wenn der Stab in das Querloch (35) eingeführt wird, und in die gerade Konfiguration zurückkehren, wenn die Abschnitte in die wenigstens eine Ringnut (32) eingreifen.

7. System nach Anspruch 6, dadurch gekennzeichnet, dass die Drahtfeder (37) im Wesentlichen U-förmig ist, dass die geraden Abschnitte an einem Ende durch einen geraden Abschnitt (37b) verbunden sind, der, wenn die Drahtfeder in der montierten Konfiguration ist, an einem Haken (38) verhakt ist, der am Gehäuse (33, 34) gebildet ist, wobei die jeweils anderen Enden der geraden Abschnitte in einen kleinen Endabschnitt (37a) auslaufen, der mit dem Gehäuse (33, 34) im Eingriff ist und sich in dieses durch einen Schlitz (36) erstreckt.

8. System nach Anspruch 1, dadurch gekennzeichnet, dass das federnde Eingriffmittel (37) eine flache Feder umfasst.

## Revendications

1. Système de blocage d'unités à roulette convenant au montage de corps mobiles (10) tels que les poubelles, comprenant :
au moins une unité blocable à roulette (15),
au moins un mécanisme (20) à organe de manoeuvre destiné à l'unité au moins à roulette (15) et comprenant un carter (33, 34) ayant un trou transversal (35),
une barre de manoeuvre (21) logée dans le trou (35) et couplée au mécanisme à organe de manoeuvre (20) pour la manoeuvre du mécanisme (20), et
un dispositif de retenue destiné à retenir axialement la barre (21) couplée aux mécanismes respectifs à organe de manoeuvre (20), caractérisé en ce que le dispositif de retenue comporte au moins une gorge annulaire (32) formée sur la barre (21) et un dispositif élastique de coopération (37) monté sur le carter (33, 34), et déformable élastiquement lors de l'insertion de la barre (21) dans le trou transversal (35) afin qu'il coopère élastiquement dans la gorge au moins (32) et serre axialement la barre (21) par rapport au carter (33, 34) du mécanisme à organe de manoeuvre (20).

2. Système selon la revendication 1, caractérisé en ce que la barre (21) a une extrémité conique (21a) destinée à être insérée dans le trou transversal (35), la gorge annulaire au moins (32) étant formée à proximité de l'extrémité conique (21a).

3. Système selon la revendication 1 ou 2, caractérisé en ce que la barre a plusieurs gorges annulaires (32) espacées d'une distance prédéterminée.

4. Système selon la revendication 1, caractérisé en ce que le dispositif élastique de coopération (37) peut être retiré du carter (33, 34) lorsque la barre (21) n'est pas insérée dans le trou transversal (35).

5. Système selon la revendication 4, caractérisé en ce que le trou transversal (35) délimite deux trous opposés dans le carter (33, 34), le dispositif élastique (37) de coopération pouvant être monté sélectivement sur le mécanisme à organe de manoeuvre près de l'un et/ou l'autre des trous opposés.

6. Système selon la revendication 1, caractérisé en ce que le dispositif élastique de coopération comporte un ressort (37) constitué d'un fil et comprenant deux parties rectilignes qui sont courbées latéralement par la barre (21) lorsque la barre est insérée dans le trou transversal (35) et reviennent vers la configuration rectiligne lorsque lesdites parties sont en contact avec la gorge annulaire au moins (32).

7. Système selon la revendication 6, caractérisé en ce que le ressort (37) formé d'un fil a pratiquement une forme en U, les parties rectilignes étant raccordées à une extrémité par une partie rectiligne (37b) qui, lorsque le ressort en forme de fil a sa configuration montée, est accrochée sur un crochet (38) formé sur le carter (33, 34), chacune des autres extrémités des parties rectilignes aboutissant à une petite partie d'extrémité (37a) coopérant avec le carter (33, 34) et passant dans une fente (36).

8. Système selon la revendication 1, caractérisé en ce que le dispositif élastique de coopération (37) est un ressort plat.
